# EUROPEAN PATENT APPLICATION

(11) **EP 4 645 666 A1**
(43) Date of publication of application: **05.11.2025**
(21) Application number: 23910120.7
(22) Date of filing: 13.12.2023
(51) Int. Cl.: H02M 3/335

(54) **ON-BOARD THREE-PORT CONVERTER CONTROL METHOD**

(30) Priority: 30.12.2022 CN 202211723042
(71) Applicant: United Automotive Electronic Systems Co., Ltd., Pudong New Area Shanghai 201206 (CN)
(72) Inventor: CHEN, Junjie, Shanghai 201206 (CN); LIANG, Dong, Shanghai 201206 (CN); MENG, Fanpeng, Shanghai 201206 (CN); WEI, Ting, Shanghai 201206 (CN); KONG, Xiangfei, Shanghai 201206 (CN)
(74) Representative: Pohlman, Sandra M.
(86) International application number: PCT/CN2023/138306
(87) International publication number: WO 2024/140190

(57) **Abstract**

Disclosed herein is a method for controlling an on-board three-port converter, in which during transfer of power from port B to port C, switching transistors in upper half and lower half of a fourth bridge arm are turned on complementarily with a 50% duty cycle, and switching transistors in upper half and lower half of a fifth bridge arm in a circuit at port B are turned on complementarily with a 50% duty cycle are also turned on complementarily with a 50% duty cycle, in a circuit at port B, so that both a period of simultaneous on-time of the switching transistor in the upper half of the fourth bridge arm and the switching transistor in the lower half of the fifth bridge arm and a period of simultaneous on-time of the switching transistor in the lower half of the fourth bridge arm and the switching transistor in the upper half of the fifth bridge arm are equal to a zeroth time interval. Moreover, switching transistors in upper half and lower half of a third bridge arm are maintained OFF, and ON and OFF states of switching transistors in bridge arms in a circuit at port A to cause a bus capacitor in the circuit at port A to discharge power back to port B to reduce a voltage at port A. This method can prevent overvoltage at port A due to excessive power being transferred to port A, which may cause damage to the bus capacitor. In addition, this method will not cause significant reactive power circulating current, or have a considerable adverse impact on power conversion efficiency.

## Description

### TECHNICAL FIELD

The present invention relates to circuitry, and particularly to a method for controlling an on-board three-port converter.

### BACKGROUND

With the rapid development of electric vehicles, on-board chargers (OBCs, e.g., direct current-to-direct current (DC/DC) converters), which are important components of electric vehicles, are developing towards higher integration and lower cost. Nowadays, both the industrial and academic communities are exploring superior solutions over physical integration for reduced footprint and cost.

Patent document CN107623365A discloses a three-port on-board charger topology, which, as shown in Fig. 1, integrates the functionalities of an OBC and a DC/DC converter by shared use of a transformer core and a power switching transistor on the high-voltage battery side. However, this integration approach suffers from magnetic coupling between the OBC and the DC/DC converter due to the shared use of transformer TX1, which makes complete power decoupling control impossible. For example, when the DC/DC converter is operating alone to transfer power from port B to port C, undesired transfer of power to port A via transformer TX₁ may occur and cause overvoltage at port A, possibly leading to capacitor damage.

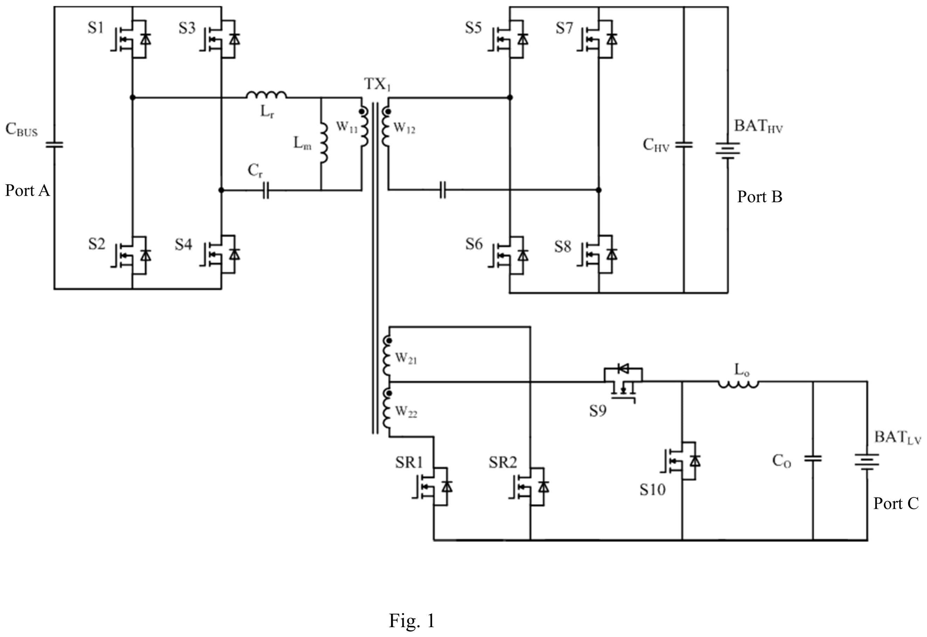

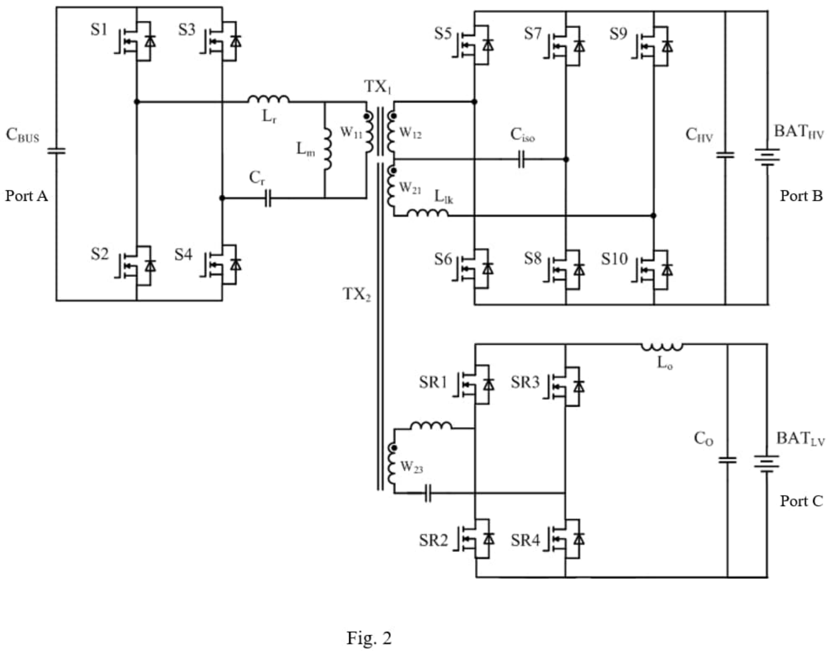

Patent document CN110649813A discloses another three-port on-board charger topology, which, as shown in Fig. 2, integrates the functionalities of an OBC and a DC/DC converter by shared use of an arm of a power bridge. Compared with the three-port topology of Fig. 1 based on magnetic integration, this topology is free of magnetic coupling and provides a reduced degree of power coupling, which allows for easier control. When the DC/DC converter is transferring power from port B to port C, port A remains idle normally without a voltage being expected to be established. The power transfer from port B to port C is accomplished by transformer TX₂, ideally without any power being coupled to transformer TX₁ and hence to port A. However, as switching transistors in this topology are all associated with parasitic junction capacitance, responsive to switching transistors S7 and S8 in a circuit at port B being turned on/off, an abrupt change may occur in a midpoint voltage of a bridge arm consisting of switching transistors S7 and S8, which may cause resonance at a junction capacitor between switching transistors S5 and S6. The resonance may be coupled as a voltage to port A via transformer TX₁, in turn causing midpoints of respective bridge arms in a circuit at port A to resonate. When any of the resonant voltages at the midpoints of the two bridge arms in the circuit at port A rises beyond a voltage present at bus capacitor C_{BUS} in port A, a body diode of the corresponding pair of switching transistors S1/S4 or S2/S3 in the circuit at port A will be turned on to charge bus capacitor C_{BUS} of port A, leading to a voltage at port A ramping up and exceeding a withstand voltage of bus capacitor C_{BUS} a certain time later. That is, it may be damaged due to overvoltage.

### SUMMARY

The problem sought to be solved by the present invention is to a method for controlling an on-board three-port converter, capable of preventing overvoltage at port A due to excessive power being transferred to port A, which may cause damage to a bus capacitor. This method will not cause significant reactive power circulating current, or have a considerable adverse impact on power conversion efficiency.

To this end, in a method described herein, a three-port on-board charger circuit includes a first transformer TX₁, a second transformer TX₂, a circuit at port A, a circuit at port B and a circuit at port C. In circuit at port A, midpoints of first and second bridge arms are coupled to respective opposite terminals of port-A-side winding W₁₁ in first transformer TX₁, and opposite terminals of each of the first and second bridge arms are coupled to respective opposite terminals of bus capacitor C_{BUS} which provide port A. In the circuit at port B, opposite terminals of each of third, fourth and fifth bridge arms are coupled to respective opposite terminals of a high-voltage battery BAT_{HV} provide port B. A midpoint of the fourth bridge arm is coupled to a non-dotted terminal of port-B-side winding W₁₂ in first transformer TX₁ and a dotted terminal of port-B-side winding W₂₁ in second transformer TX₂. A midpoint of the third bridge arm is coupled to a dotted terminal of port-B-side winding W₁₂ in first transformer TX₁. A midpoint of the fifth bridge arm is coupled to a non-dotted terminal of port-B-side winding W₂₁ in second transformer TX₂. In the circuit at port C, an input terminal of a rectifier/filter circuit is coupled to a port-C-side winding in second transformer TX₂, and an output terminal of the rectifier/filter circuit provides port C and supplies a low charging voltage to a low-voltage battery BATLV.

Transfer of power from port B to port C includes:
Turning on switching transistor S7 in an upper half and switching transistor S8 in a lower half, of the fourth bridge arm, complementarily with a 50% duty cycle, and turning on switching transistor S9 in an upper half and switching transistor S10 in a lower half, of the fifth bridge arm complementarily with a 50% duty cycle, in the circuit at port B, so that both a period of simultaneous on-time of switching transistor S7 in the upper half of the fourth bridge arm and switching transistor S10 in the lower half of the fifth bridge arm and a period of simultaneous on-time of switching transistor S8 in the lower half of the fourth bridge arm and switching transistor S9 in the upper half of the fifth bridge arm are equal to zeroth time interval T0; maintaining switching transistor S5 in an upper half and switching transistor S6 in a lower half, of the third bridge arm, OFF; and adjusting ON and OFF states of switching transistors in bridge arms in the circuit at port A to cause the bus capacitor in the circuit at port A to discharge power back to port B.

Preferably, during the transfer of power from port B to port C, a period of simultaneous on-time of switching transistor S1 in an upper half of the first bridge arm and switching transistor S4 in a lower half of the second bridge arm, in the circuit at port A, may be compassed within the period of simultaneous on-time of switching transistor S7 in the upper half of the fourth bridge arm and switching transistor S10 in the lower half of the fifth bridge arm and a period of simultaneous on-time of switching transistor S3 in an upper half of the second bridge arm and switching transistor S2 in a lower half of the first bridge arm, in the circuit at port A, may be compassed within the period of simultaneous on-time of switching transistor S9 in the upper half of the fifth bridge arm and switching transistor S8 in the lower half of the fourth bridge arm.

Preferably, during the transfer of power from port B to port C, first time interval T1 after the period of simultaneous on-time of switching transistor S7 in the upper half of the fourth bridge arm and switching transistor S10 in the lower half of the fifth bridge arm starts, the period of simultaneous on-time of switching transistor S1 in the upper half of the first bridge arm and switching transistor S4 in the lower half of the second bridge arm may start, in the circuit at port A, so that T1<T2<T0, where T2 represents the period of simultaneous on-time of switching transistor S1 in the upper half of the first bridge arm and switching transistor S4 in the lower half of the second bridge arm, in the circuit at port A.

Preferably, during the transfer of power from port B to port C, phases of the switching transistors in the bridge arms of the fourth bridge arm may precede or lag behind the switching transistors in the bridge arms of the fifth bridge arm, and the period of simultaneous on-time of switching transistor S3 in the upper half of the second bridge arm and switching transistor S2 in the lower half of the first bridge arm may lag behind or precede the period of simultaneous on-time of switching transistor S1 in the upper half of the first bridge arm and switching transistor S4 in the lower half of the second bridge arm by half a cycle and the two period of simultaneous on-time may be equally long.

Preferably, first time interval T1 may range from 100 ns to 200 ns.

Preferably, during the transfer of power from port B to port C, the switching transistor S1 in the upper half of the first bridge arm and the switching transistor S3 in the upper half of the second bridge arm, may remain OFF, while the switching transistor S2 in the lower half of the first bridge arm and the switching transistor S4 in the lower half of the second bridge arm may remain ON, in the circuit at port A; or the switching transistor S1 in the upper half of the first bridge arm and the switching transistor S3 in the upper half of the second bridge arm may remain ON, while the switching transistor S2 in the lower half of the first bridge arm and the switching transistor S4 in the lower half of the second bridge arm may remain OFF, in the circuit at port A.

Preferably, the opposite terminals of port-A-side winding W₁₁ in first transformer TX₁ may be respectively coupled to the midpoints of the first and second bridge arms via a resonant network,
the resonant network including resonant inductor Lᵣ, excitation inductor Lₘ and resonant capacitor Cᵣ,
resonant inductor Lᵣ coupled between one of the terminals of port-A-side winding W₁₁ in first transformer TX₁ and the midpoint of the first bridge arm,
resonant capacitor Cᵣ coupled between the other terminal of port-A-side winding W₁₁ in first transformer TX₁ and the midpoint of the second bridge arm,
excitation inductor Lₘ coupled between the opposite terminals of port-A-side winding W₁₁ in first transformer TX₁.

Preferably, a high-voltage capacitor C_{HV} may be coupled between the opposite terminals of port B,
a DC isolation capacitor Cᵢₛₒ between a node where port-B-side winding W₂₁ in second transformer TX₂ is connected in series to port-B-side winding W₁₂ in first transformer TX₁ and the midpoint of the fourth bridge arm and
a leakage inductor Lₗₖ between the midpoint of the fifth bridge arm and port-B-side winding W₂₁ in the second transformer TX₂.

Preferably, the port-C-side winding of the second transformer TX₂ may include a first port-C-side winding W₂₂ and a second port-C-side winding W₂₃, which are connected by a dotted to non-dotted series connection, wherein:
the circuit at port C includes a first switching transistor SR1, a second switching transistor SR2, a filter inductor Lₒ and a filter capacitor Cₒ;
source and drain terminals of the first switching transistor SR1 are coupled to a terminal of second port-C-side winding W₂₃ that is not connected in series and a negative terminal of low-voltage battery BAT_{LV}, respectively, and source and drain terminals of second switching transistor SR2 are coupled to a terminal of first port-C-side winding W₂₂ that is not connected in series and a negative terminal of the low-voltage battery BAT_{LV};
the filter inductor Lₒ is connected in series between a node, where the first port-C-side winding W₂₂ is connected to the second port-C-side winding W₂₃, and the positive terminal of the low-voltage battery BAT_{LV}; and
opposite terminals of filter capacitor Cₒ are respectively connected to the positive and negative terminals of low-voltage battery BAT_{LV}.

In the three-port on-board charger circuit used in the method described herein, the secondary component in the high-voltage DC/DC converter and the primary component in the low-voltage DC/DC converter are integrated into a shared circuit (i.e., the fourth bridge arm). In order to enable power to be transferred from port B to port C, switching transistors S7 to S10 in the fourth and fifth bridge arms in the circuit at port B operate in a phase-shifted mode, in which, in the circuit at port B, switching transistor S7 in the upper half and switching transistor S8 in the lower half, of the fourth bridge arm, are turned on complementarily with a 50% duty cycle, and switching transistor S9 in the upper half and switching transistor S10 in the lower half, of the fifth bridge arm, are turned on complementarily with a 50% duty cycle. Moreover, a period of simultaneous on-time of switching transistor S7 in the upper half of the fourth bridge arm and switching transistor S10 in the lower half of the fifth bridge arm and a period of simultaneous on-time of switching transistor S8 in the lower half of the fourth bridge arm and switching transistor S9 in the upper half of the fifth bridge arm are both equal to zeroth time interval T0. Both switching transistor S5 in the upper half and switching transistor S6 in the lower half, of the third bridge arm, remain off. A length of these periods of simultaneous on-time, which is equal to a length of zeroth time interval T0, determines the amount of power that can be transferred from port B to port C, and can be calculated on-the-fly based on a voltage at port C by means of a closed-loop voltage controller. During the transfer of power from port B to port C, ON and OFF states of the switching transistors in the bridge arms in the circuits at ports A and B may be adjusted to cause the bus capacitor in the circuit at port A to discharge power back to port B to pull down the voltage at port A to prevent overvoltage at port A due to excessive transfer of power to port A, which may cause damage to bus capacitor C_{BUS}. This method will not cause significant reactive power circulating current, or have a considerable adverse impact on power conversion efficiency.

### BRIEF DESCRIPTION OF THE DRAWINGS

In order to more clearly illustrate the subject matter of the present invention, the accompanying drawings that form a part hereof are now briefly described. Apparently, these drawings show only some possible embodiments of the invention, and those of ordinary skill in the art can obtain different figures in light of those described herein without paying any creative effort.
Fig. 1 shows a three-port DC/DC converter topology disclosed in Chinese patent document CN107623365A.
Fig. 2 shows a three-port DC/DC converter topology disclosed in Chinese patent document CN110649813A.
Fig. 3 shows a three-port on-board charger circuit topology employed in a method for controlling an on-board three-port converter according to an embodiment of the present invention.
Fig. 4 shows a timing diagram for the activation of switching transistors in bridge arms of circuits at ports A and B in a method for controlling an on-board three-port converter according to an embodiment of the present invention.
Fig. 5a shows a current path during turn-on of S1/S4 in a circuit at port A in a method for controlling an on-board three-port converter according to an embodiment of the present invention.
Fig. 5b shows a discharge path during turn-on of S2/S3 in a circuit at port A in a method for controlling an on-board three-port converter according to an embodiment of the present invention.
Fig. 6 shows a timing diagram for the activation of switching transistors in bridge arms of circuits at ports A and B in a method for controlling an on-board three-port converter according to another embodiment of the present invention.
Fig. 7 shows a current path in a method for controlling an on-board three-port converter according to the present invention.

### DETAILED DESCRIPTION

Embodiments of the present invention will be described clearly and fully hereunder in conjunction with the appended drawings. Evidently, the embodiments set forth herein are merely some but not all possible embodiments of the application. Any and all other embodiments devisable by skilled artisans in light of the disclosed embodiments without paying any creative effort are considered to fall within the scope of protection of this application.

As used herein, the terms "first," "second," and the like do not denote any order, quantity, or importance, but rather are used to distinguish one element from another. The use of "including" or "comprising" or the like herein is meant to encompass the elements or items listed thereafter and equivalents thereof but do not preclude the presence of other elements or items. The terms "connected", "coupled" or the like are not restricted to physical or mechanical connections or couplings, and can include electrical connections or couplings, whether direct or indirect. "Upper", "lower", "left", "right" or the like may be used to describe only a relative position, which may change with a change in the absolute position of the referenced item.

It is to be noted that should there be no conflict, the embodiments described hereunder and features thereof can be combined any combination.

The invention will be further described below with reference to the accompanying drawings, which illustrate non-limiting specific embodiments thereof.

### EXAMPLE 1

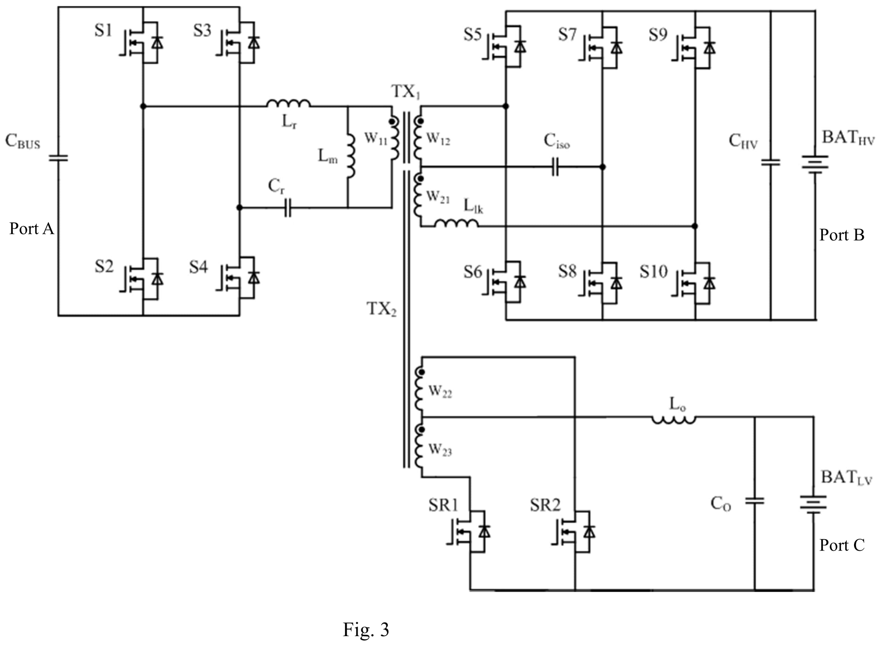

As shown in Fig.3, a three-port on-board charger circuit used in a method for controlling an on-board three-port converter includes a first transformer TX₁, a second transformer TX₂, a circuit at port A, a circuit at port B and a circuit at port C. Midpoints of first and second bridge arms in the circuit at port A are coupled to respective opposite terminals of port-A-side winding W₁₁ in first transformer TX₁. Opposite sides of each of the first and second bridge arms are coupled to respective opposite terminals of bus capacitor C_{BUS}. The opposite terminals of bus capacitor C_{BUS} provide port A (AC Port). In the circuit at port B, opposite terminals of each of third, fourth and fifth bridge arms are coupled to respective opposite terminals of a battery BAT_{HV}, which serves as a high-voltage (>100 V) power source, and provide port B (High-Voltage Port). A midpoint of the fourth bridge arm is coupled to a non-dotted terminal of port-B-side winding W₁₂ in first transformer TX₁ and a dotted terminal of port-B-side winding W₂₁ in second transformer TX₂. A midpoint of the third bridge arm is coupled to a dotted terminal of port-B-side winding W₁₂ in first transformer TX₁. A midpoint of the fifth bridge arm is coupled to a non-dotted terminal of port-B-side winding W₂₁ in second transformer TX₂. In the circuit at port C, an input terminal of a rectifier/filter circuit is coupled to a port-C-side winding in second transformer TX₂, from which (Low-Voltage Port) a charging voltage (<50 V) is supplied to low-voltage battery BAT_{LV}.

Transfer of power from port B to port C includes the following actions:
In the circuit at port B, switching transistor S7 in an upper half and switching transistor S8 in a lower half, of the fourth bridge arm, are turned on complementarily with a 50% duty cycle. Switching transistor S9 in an upper half and switching transistor S10 in a lower half, of the fifth bridge arm, are turned on complementarily with a 50% duty cycle. A period of simultaneous on-time of switching transistor S7 in the upper half of the fourth bridge arm and switching transistor S10 in the lower half of the fifth bridge arm and a period of simultaneous on-time of switching transistor S8 in the lower half of the fourth bridge arm and switching transistor S9 in the upper half of the fifth bridge arm are both equal to zeroth time interval T0. Both switching transistor S5 in an upper half and switching transistor S6 in a lower half, of the third bridge arm, remain off. ON and OFF states of switching transistors in the bridge arms of the circuit at port A can be adjusted to cause the bus capacitor in the circuit at port A to discharge power back to port B to lower a voltage at port A.

Therefore, in the three-port on-board charger circuit used in the method of this embodiment, the secondary component in the high-voltage DC/DC converter and the primary component in the low-voltage DC/DC converter (i.e., the fourth bridge arm) are integrated into a shared circuit. In order to enable power to be transferred from port B to port C, switching transistors S7 to S10 in the fourth and fifth bridge arms in the circuit at port B operate in a phase-shifted mode, in which, in the circuit at port B, switching transistor S7 in the upper half and switching transistor S8 in the lower half, of the fourth bridge arm, are turned on complementarily with a 50% duty cycle, and switching transistor S9 in the upper half and switching transistor S10 in the lower half, of the fifth bridge arm, are turned on complementarily with a 50% duty cycle. Moreover, a period of simultaneous on-time of switching transistor S7 in the upper half of the fourth bridge arm and switching transistor S10 in the lower half of the fifth bridge arm and a period of simultaneous on-time of switching transistor S8 in the lower half of the fourth bridge arm and switching transistor S9 in the upper half of the fifth bridge arm are both equal to zeroth time interval T0. Both switching transistor S5 in the upper half and switching transistor S6 in the lower half, of the third bridge arm, remain off. A length of these periods of simultaneous on-time, which is equal to a length of zeroth time interval T0, determines the amount of power that can be transferred from port B to port C, and can be calculated on-the-fly based on a voltage at port C by means of a closed-loop voltage controller. During the transfer of power from port B to port C, ON and OFF states of the switching transistors in the bridge arms in the circuits at ports A and B may be adjusted to cause the bus capacitor in the circuit at port A to discharge power back to port B to pull down the voltage at port A to prevent overvoltage at port A due to excessive transfer of power to port A, which may cause damage to bus capacitor C_{BUS}. This method will not cause significant reactive power circulating current, or have a considerable adverse impact on power conversion efficiency.

### EXAMPLE 2

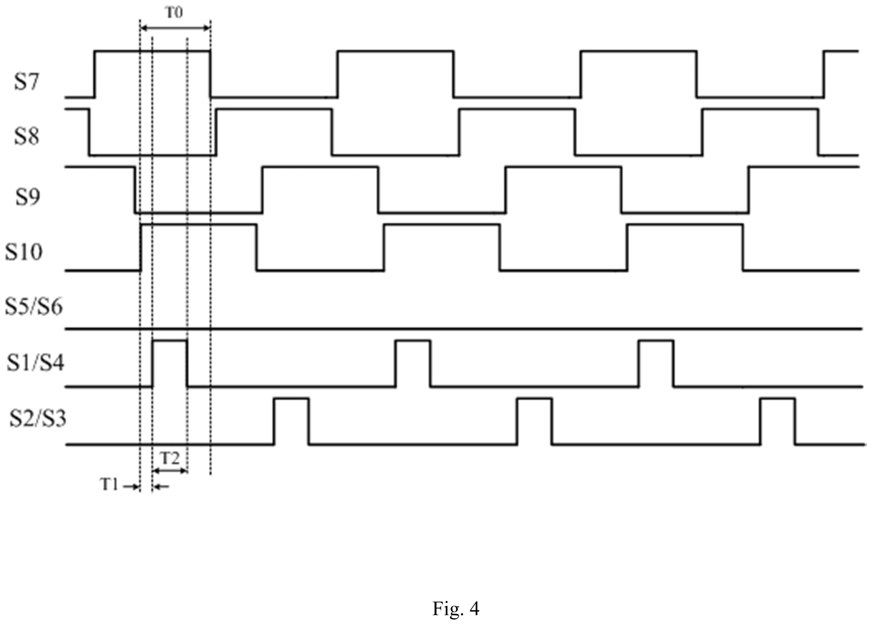

In addition, in the method of the first embodiment, as shown in Fig. 4, during transfer of power from port B to port C, a period of simultaneous on-time of switching transistor S1 in an upper half of a first bridge arm and switching transistor S4 in a lower half of a second bridge arm, of the circuit at port A, may be encompassed within the period of simultaneous on-time of switching transistor S7 in the upper half of the fourth bridge arm and switching transistor S10 in the lower half of the fifth bridge arm. That is, T2<T0, where T2 represents the period of simultaneous on-time of switching transistor S1 in the upper half of the first bridge arm and switching transistor S4 in the lower half of the second bridge arm, of the circuit at port A. Further, a period of simultaneous on-time of switching transistor S3 in an upper half of the second bridge arm and switching transistor S2 in a lower half of the first bridge arm, of the circuit at port A, may be encompassed within the period of simultaneous on-time of switching transistor S9 in the upper half of the fifth bridge arm and switching transistor S8 in the lower half of the fourth bridge arm.

Preferably, during transfer of power from port B to port C, a first time interval T1 after the period of simultaneous on-time of switching transistor S7 in the upper half of the fourth bridge arm and switching transistor S10 in the lower half of the fifth bridge arm starts, the period of simultaneous on-time of switching transistor S1 in the upper half of the first bridge arm and switching transistor S4 in the lower half of the second bridge arm, of the circuit at port A, starts, That is, T1<T2<T0. This enables switching transistor S1 in the upper half of the first bridge arm and switching transistor S4 in the lower half of the second bridge arm to be turned on under quasi-zero-voltage conditions. Preferably, first time interval T1 ranges from 100 ns to 200 ns.

Preferably, during transfer of power from port B to port C, phases of the switching transistors in the fourth bridge arm precede or lag behind phases of the switching transistors in the fifth bridge arm. The period of simultaneous on-time of switching transistor S3 in the upper half of the second bridge arm and switching transistor S2 in the lower half of the first bridge arm lags behind or precedes the period of simultaneous on-time of switching transistor S1 in the upper half of the first bridge arm and switching transistor S4 in the lower half of the second bridge arm by half one cycle, and they are equally long.

Preferably, the period of simultaneous on-time of switching transistor S3 in the upper half of the second bridge arm and switching transistor S2 in the lower half of the first bridge arm lags behind the period of simultaneous on-time of switching transistor S1 in the upper half of the first bridge arm and switching transistor S4 in the lower half of the second bridge arm by half a cycle.

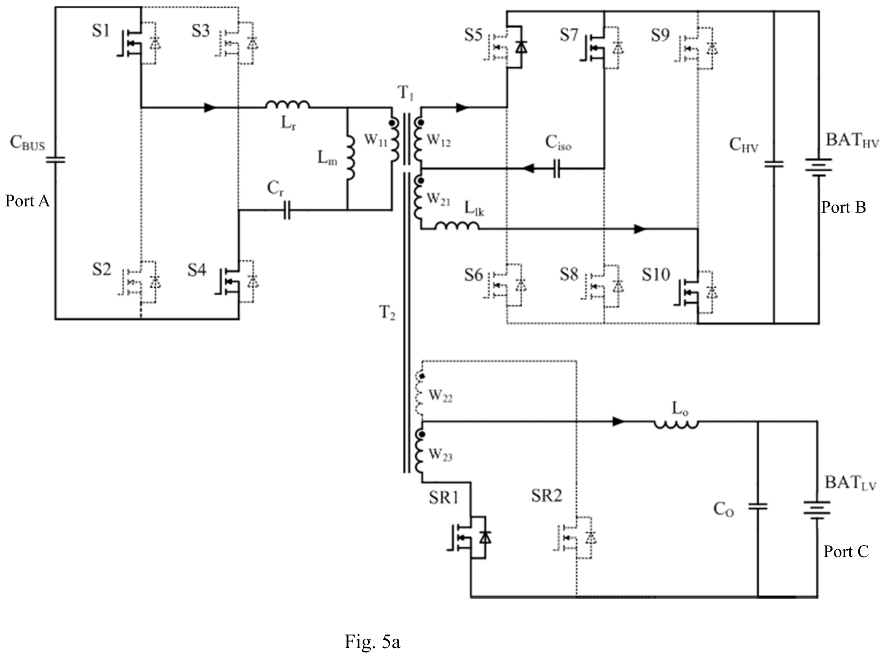

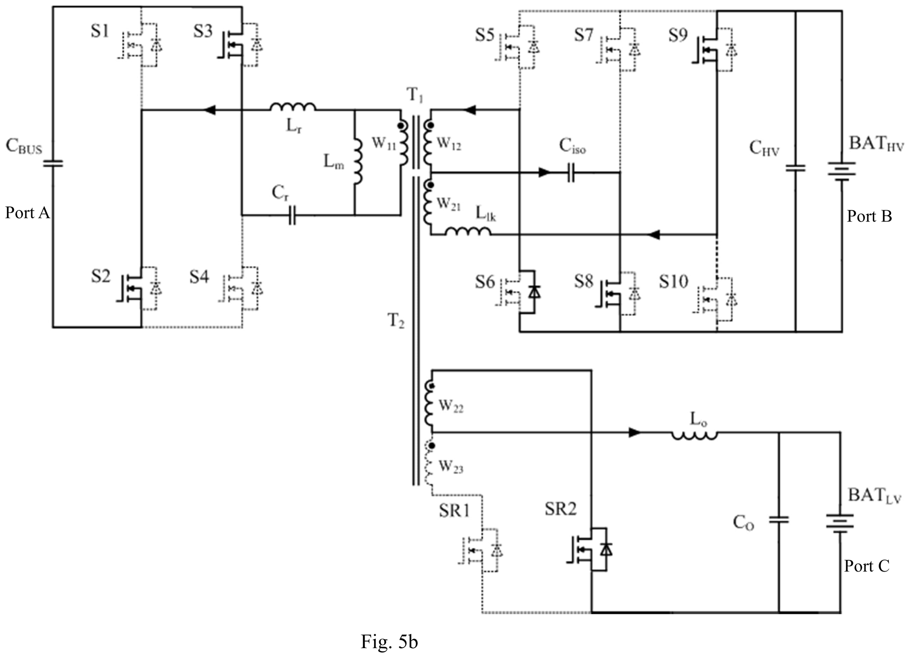

Therefore, in the method according to this embodiment, the switching transistors in the first and second bridge arms of the circuit at port A operate in a symmetrical Pulse Width Modulation (PWM), in which period of simultaneous on-time T2 of switching transistor S1 in the upper half of the first bridge arm and switching transistor S4 in the lower half of the second bridge arm, of the circuit at port A, is encompassed within period of simultaneous on-time T0 of switching transistor S7 in the upper half of the fourth bridge arm and switching transistor S10 in the lower half of the fifth bridge arm. During period of simultaneous on-time T2 of switching transistor S1 in the upper half of the first bridge arm and switching transistor S4 in the lower half of the second bridge arm, of the circuit at port A, bus capacitor C_{BUS} in the circuit at port A discharges power back to port B to pull down the voltage at port A. A length of period T2 may be calculated on-the-fly by a voltage control loop based on the voltage at port A, or set to a fixed value in an open-loop manner. A greater value of period T2 means a longer discharge interval of bus capacitor C_{BUS}, which results in a lower final voltage at port A. Figs. 5(a) and 5(b) are schematic illustrations of current paths in period T2 in the method. As can be seen in Fig. 5(a), during period of simultaneous on-time T2 of switching transistor S1 in the upper half of the first bridge arm and switching transistor S4 in the lower half of the second bridge arm, of the circuit at port A, channels in switching transistor S1 in the upper half of the first bridge arm and switching transistor S4 in the lower half of the second bridge arm, of the circuit at port A, and a body diode in switching transistor S5 in the upper half of the third bridge arm and a channel in switching transistor S7 in the upper half of the fourth bridge arm, of the circuit at port B, provide a discharge path for bus capacitor C_{BUS}. As can be seen in Fig. 5(b), during the period of simultaneous on-time of switching transistor S3 in the upper half of the second bridge arm and switching transistor S2 in the lower half of the first bridge arm, of the circuit at port A, channels in switching transistor S3 in the upper half of the second bridge arm and switching transistor S2 in the lower half of the first bridge arm, of the circuit at port A, and a body diode in switching transistor S6 in the lower half of third bridge arm and a channel in switching transistor S8 in the lower half of the fourth bridge arm, of the circuit at port B, provide a discharge path for bus capacitor C_{BUS}. In this way, damage to bus capacitor C_{BUS} that may occur due to an uncontrolled rise of the voltage at port A can be prevented.

### EXAMPLE 3

Additionally, during transfer of power from port B to port C in the method of the first embodiment, in the circuit at port A, switching transistor S1 in the upper half of the first bridge arm and switching transistor S3 in the upper half of the second bridge arm may remain OFF, whilst switching transistor S2 in the lower half of the first bridge arm and switching transistor S4 in the lower half of the second bridge arm, may remain ON. Alternatively, in the circuit at port A, switching transistor S1 in the upper half of the first bridge arm and switching transistor S3 in the upper half of the second bridge arm may remain ON, while switching transistor S2 in the lower half of the first bridge arm and switching transistor S4 in the lower half of the second bridge arm may remain OFF.

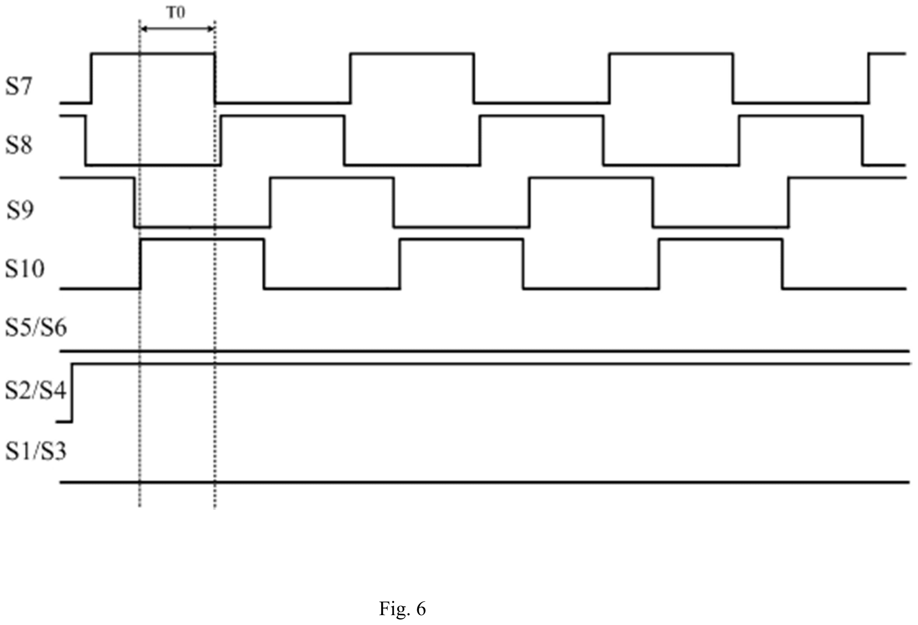

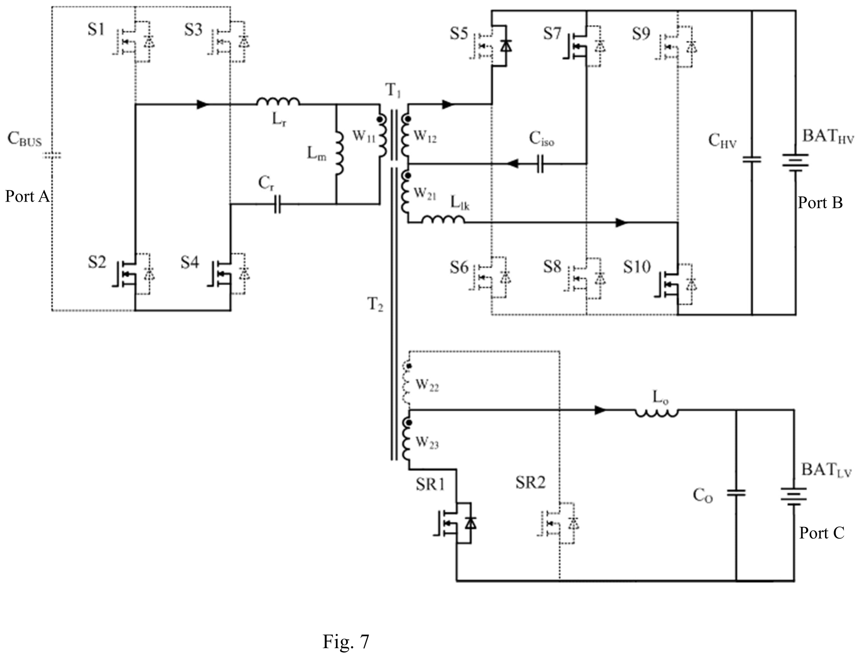

Thus, in the method according to this embodiment, as shown in Fig. 6, during transfer of power from port B to port C, the current path to bus capacitor C_{BUS} at port A is cut off through shorting the midpoints of the two bridge arms in the circuit at port A to each other. As shown in Fig. 7, since switching transistor S2 in the lower half of the first bridge arm and switching transistor S4 in the lower half of the second bridge arm remain ON, no current flows into the bus capacitor at port A. Moreover, as switching transistor S5 in the upper half and switching transistor S6 in the lower half, of the third bridge arm, both remain OFF, no power will be transferred from port B to port A. Therefore, according to this embodiment, shorting the midpoints of the two bridge arms in the circuit at port A would produce minimal circulating current and almost have no impact on the conversion efficiency between ports B and C.

### EXAMPLE 4

Further, in the method of the first embodiment, the opposite terminals of port-A-side winding W₁₁ in first transformer TX₁ may be coupled to the midpoints of the first and second bridge arms through a resonant network.

The resonant network includes resonant inductor Lᵣ, excitation inductor Lₘ and resonant capacitor Cᵣ.

Resonant inductor Lᵣ is coupled between one terminal of port-A-side winding W₁₁ in first transformer TX₁ and the midpoint of the first bridge arm.

Resonant capacitor Cᵣ is coupled to the other terminal of port-A-side winding W₁₁ in first transformer TXₗ and the midpoint of the second bridge arm.

Excitation inductor Lₘ is coupled between the opposite terminals of port-A-side winding W₁₁ in first transformer TX₁.

Preferably, high-voltage capacitor C_{HV} is coupled between the opposite terminals of port B.

DC isolation capacitor Cᵢₛₒ is coupled between the node where port-B-side winding W₂₁ in second transformer TX₂ is connected in series to port-B-side winding W₁₂ in first transformer TX₁ and the midpoint of the fourth bridge arm.

Leakage inductor Lₗₖ is coupled between the midpoint of the fifth bridge arm and port-B-side winding W₂₁ in second transformer TX₂.

Preferably, port-C-side winding in second transformer TX₂ includes first port-C-side winding W₂₂ and second port-C-side winding W₂₃, which are connected by a dotted to non-dotted series connection.

The circuit at port C includes first switching transistor SR1, second switching transistor SR2, filter inductor Lₒ and filter capacitor Cₒ.

Source and drain terminals of first switching transistor SR1 are coupled to the terminal of second port-C-side winding W₂₃ that is not connected in series and a negative terminal of low-voltage battery BAT_{LV}, respectively. Source and drain terminals of second switching transistor SR2 are coupled to the terminal of first port-C-side winding W₂₂ that is not connected in series and the negative terminal of low-voltage battery BAT_{LV}.

Filter inductor Lₒ is connected in series between the junction of first port-C-side winding W₂₂ and second port-C-side winding W₂₃ and a positive terminal of low-voltage battery BAT_{LV}.

Opposite terminals of filter capacitor Cₒ are coupled respectively to the positive and negative terminals of low-voltage battery BAT_{LV}.

Presented above are merely several exemplary embodiments of the present disclosure, and they are not intended to limit this disclosure in any way. Any and all alternations, equivalent substitutions, modifications and so on made within the spirit and principles of the present disclosure are considered to fall within the scope of protection of this disclosure.

## Claims

1. A method for controlling an on-board three-port converter, in which: a three-port on-board charger circuit comprises a first transformer (TX₁), a second transformer (TX₂), a circuit at port A, a circuit at port B and a circuit at port C; a midpoint of a first bridge arm and a midpoint of a second bridge arm in the circuit at port A are coupled to respective opposite terminals of a port-A-side winding (W₁₁) in the first transformer (TX₁); opposite terminals of each of the first bridge arm and the second bridge arm in the circuit at port A are coupled to respective opposite terminals of a bus capacitor (C_{BUS}) which provide port A; opposite terminals of each of a third bridge arm, a fourth bridge arm and a fifth bridge arm in the circuit at port B are coupled to respective opposite terminals of a high-voltage battery (BAT_{HV}) provide port B; a midpoint of the fourth bridge arm is coupled to a non-dotted terminal of a port-B-side winding (W₁₂) in the first transformer (TX₁) and a dotted terminal of a port-B-side winding (W₂₁) in the second transformer (TX₂); a midpoint of the third bridge arm is coupled to a dotted terminal of the port-B-side winding (W₁₂) in the first transformer (TX₁); a midpoint of the fifth bridge arm is coupled to a non-dotted terminal of the port-B-side winding (W₂₁) in the second transformer (TX₂); an input terminal of a rectifier/filter circuit in the circuit at port C is coupled to a port-C-side winding in the second transformer (TX₂); and an output terminal of the rectifier/filter circuit in the circuit at port C provides port C and supplies a charging voltage to a low-voltage battery (BAT_{LV}), **characterized in that** transfer of power from port B to port C comprises:
turning on a switching transistor (S7) in an upper half and a switching transistor (S8) in a lower half, of the fourth bridge arm, complementarily with a 50% duty cycle, and turning on a switching transistor (S9) in an upper half and a switching transistor (S10) in a lower half, of the fifth bridge arm complementarily with a 50% duty cycle, in the circuit at port B, and both a period of simultaneous on-time of the switching transistor (S7) in the upper half of the fourth bridge arm and the switching transistor (S10) in the lower half of the fifth bridge arm and a period of simultaneous on-time of the switching transistor (S8) in the lower half of the fourth bridge arm and the switching transistor (S9) in the upper half of the fifth bridge arm are equal to a zeroth time interval T0; maintaining a switching transistor (S5) in an upper half and a switching transistor (S6) in a lower half, of the third bridge arm, OFF; and adjusting ON and OFF states of switching transistors in bridge arms in the circuit at port A to cause the bus capacitor in the circuit at port A to discharge power back to port B.

2. The method according to claim 1, wherein:
during the transfer of power from port B to port C, a period of simultaneous on-time of a switching transistor (S1) in an upper half of the first bridge arm and a switching transistor (S4) in a lower half of the second bridge arm, in the circuit at port A, is compassed within the period of simultaneous on-time of the switching transistor (S7) in the upper half of the fourth bridge arm and the switching transistor (S10) in the lower half of the fifth bridge arm and a period of simultaneous on-time of a switching transistor (S3) in an upper half of the second bridge arm and a switching transistor (S2) in a lower half of the first bridge arm, in the circuit at port A, is compassed within the period of simultaneous on-time of the switching transistor (S9) in the upper half of the fifth bridge arm and the switching transistor (S8) in the lower half of the fourth bridge arm.

3. The method according to claim 2, wherein:
during the transfer of power from port B to port C, a first time interval T1 after the period of simultaneous on-time of the switching transistor (S7) in the upper half of the fourth bridge arm and the switching transistor (S10) in the lower half of the fifth bridge arm starts, the period of simultaneous on-time of the switching transistor (S1) in the upper half of the first bridge arm and the switching transistor (S4) in the lower half of the second bridge arm starts, in the circuit at port A, so that T1<T2<T0, where T2 represents the period of simultaneous on-time of the switching transistor (S1) in the upper half of the first bridge arm and the switching transistor (S4) in the lower half of the second bridge arm, in the circuit at port A.

4. The method according to claim 3, wherein:
during the transfer of power from port B to port C, phases of the switching transistors in the bridge arms of the fourth bridge arm precede or lag behind the switching transistors in the bridge arms of the fifth bridge arm, and the period of simultaneous on-time of the switching transistor (S3) in the upper half of the second bridge arm and the switching transistor (S2) in the lower half of the first bridge arm lags behind or precedes the period of simultaneous on-time of the switching transistor (S1) in the upper half of the first bridge arm and the switching transistor (S4) in the lower half of the second bridge arm by half a cycle and the two period of simultaneous on-time are equally long.

5. The method according to claim 1, wherein:
during the transfer of power from port B to port C, the switching transistor (S1) in the upper half of the first bridge arm and the switching transistor (S3) in the upper half of the second bridge arm, remain OFF, while the switching transistor (S2) in the lower half of the first bridge arm and the switching transistor (S4) in the lower half of the second bridge arm remain ON, in the circuit at port A; or the switching transistor (S1) in the upper half of the first bridge arm and the switching transistor (S3) in the upper half of the second bridge arm remain ON, while the switching transistor (S2) in the lower half of the first bridge arm and the switching transistor (S4) in the lower half of the second bridge arm remain OFF, in the circuit at port A.

6. The method according to claim 1, wherein:
the opposite terminals of the port-A-side winding (W₁₁) in the first transformer (TX₁) are respectively coupled to the midpoint of the first bridge arm and the midpoint of the second bridge arm via a resonant network,
the resonant network comprising a resonant inductor (Lᵣ), an excitation inductor (Lₘ) and a resonant capacitor (Cᵣ),
the resonant inductor (Lᵣ) coupled between one of the terminals of the port-A-side winding (W₁₁) in the first transformer (TX₁) and the midpoint of the first bridge arm,
the resonant capacitor (Cᵣ) coupled between the other terminal of the port-A-side winding (W₁₁) in the first transformer (TX₁) and the midpoint of the second bridge arm,
the excitation inductor (Lₘ) coupled between the opposite terminals of the port-A-side winding (W₁₁) in the first transformer (TX₁).

7. The method according to claim 1, wherein:
a high-voltage capacitor (C_{HV}) is coupled between the opposite terminals of port B,
a DC isolation capacitor (Cᵢₛₒ) between a node where the port-B-side winding (W₂₁) in the second transformer (TX₂) is connected in series to the port-B-side winding (W₁₂) in the first transformer (TX₁) and the midpoint of the fourth bridge arm and
a leakage inductor (Lₗₖ) between the midpoint of the fifth bridge arm and the port-B-side winding (W₂₁) in the second transformer (TX₂).

8. The method according to claim 1, wherein:
the port-C-side winding of the second transformer (TX₂) comprises a first port-C-side winding (W₂₂) and a second port-C-side winding (W₂₃), which are connected by a dotted to non-dotted series connection, wherein:
the circuit at port C comprises a first switching transistor (SR1), a second switching transistor (SR2), a filter inductor (Lₒ) and a filter capacitor (Cₒ);
a source terminal and a drain terminal of the first switching transistor (SR1) are coupled to a terminal of the second port-C-side winding (W₂₃) that is not connected in series and a negative terminal of the low-voltage battery (BAT_{LV}), respectively, and a source terminal and a drain terminal of the second switching transistor (SR2) are coupled to a terminal of the first port-C-side winding (W₂₂) that is not connected in series and the negative terminal of the low-voltage battery (BAT_{LV});
the filter inductor (Lₒ) is connected in series between a node, where the first port-C-side winding (W₂₂) is connected to the second port-C-side winding (W₂₃), and a positive terminal of the low-voltage battery (BAT_{LV}); and
opposite terminals of the filter capacitor (Cₒ) are respectively connected to the positive terminal and the negative terminal of the low-voltage battery (BAT_{LV}).
